# EUROPEAN PATENT SPECIFICATION

(11) **EP 0 659 335 B1**
(45) Date of publication and mention of the grant of the patent: **30.07.1997**
(21) Application number: 94203699.7
(22) Date of filing: 21.12.1994
(51) Int. Cl.: A01J 27/02

(54) **Installation for applying a liquid substance to cheeses**
Vorrichtung für das Aufbringen einer flüssigen Substanz auf Käse
Installation d'application d'une substance liquide à des fromages

(30) Priority: 21.12.1993 NL 9302224
(43) Date of publication of application: 28.06.1995
(73) Proprietor: ELTEN SYSTEMS B.V., NL-3771 NA Barneveld (NL)
(72) Inventor: De Vries, Hugo Victor, NL-3851 EP Ermelo (NL)
(74) Representative: De Hoop, Eric

(56) References cited:
- NL-A- 7 115 512

## Description

The invention relates to an installation for applying a liquid substance to cheeses, as described in the preamble of claim 1.

Such an installation is known from Dutch patent application No. 71.15512. In this known installation, a V-shaped reservoir for the liquid substance is provided at its lowest point in the "tip of the V" with one or more openings, while the wipe-off surface is attached adjacent to the tip of the V on a side wall of the reservoir, said wipe-off surface projecting downwards at an angle of about 45° with the direction of conveyance. The brush is arranged with its longitudinal centre line parallel to the reservoir and approximately in the longitudinal centre plane of the reservoir below it and is driven such, that the brush hairs first wipe along the discharge opening for the liquid substance and subsequently downwardly along the wipe-off surface.

A drawback of this known installation is that due to fact that the coating liquid is taken downwardly along by the brush hairs from the reservoir openings to the free edge of the wipe-off surface, difficulties will be met in achieving an even distribution of the liquid over the brush hairs in the short time available, resulting in the liquid dripping from the wipe-off surface onto the cheeses and especially onto the conveyor, due to which not only a loss of coating material occurs, but the conveyor and the cheeses moreover become soiled and will need to be cleaned or retreated.

It is an object of the invention to remove this drawback of the known installation.

This object is realized by the measures of the characterizing part of claim 1.

By applying these measures, it is achieved that the brush hairs wipe up and take up the liquid substance, which has flown out over the metering surface, in upward direction from the metering surface. In this way, the metering surface doses the liquid substance evenly over the brush hairs in circumferential direction of the cylindrical brush, as a consequence of which the loss of liquid substance and soiling of the cheeses and the conveyor is restricted to a minimum.

A preferred embodiment of the installation according to the invention is described in claim 2.

The wipe-off surface of the installation according to the invention ensures that a possible excess of liquid substance which is taken along by the brush hairs is wiped off on the wipe-off surface and is possibly taken along by subsequent brush hairs, such, that the distribution of the liquid substance over the circumference of the cylindrical brush is improved even further. Consequently, the loss of liquid substance is further reduced and soiling of the conveyor and the cheese is still further restricted.

An especially efficient embodiment of the installation according to the invention is described in claim 3.

By applying these measures, it is achieved that the brush strips wipe up the liquid substance on the metering plate, which has flown out of the lowest perforations and spread itself over the metering plate, in upward direction from the metering plate and absorb it into the porous structure, subsequently wipe over the perforated side wall of the reservoir and return the possible excess of liquid substance back to the reservoir through the higher situated perforations and then wipe over the surface of the cheeses to be treated, by which the liquid substance is distributed evenly and in the desired amount over the cheese surface. In the installation according to the invention, therefore, circulation of liquid substance takes place from the reservoir into the brush strips and back into the reservoir, as a consequence of which highly economic use is made of the liquid substance and no loss of liquid substance and soiling of cheeses and conveyor occurs.

A preferred embodiment of the supply apparatus for the liquid substance of the installation is described in claim 5.

With this supply apparatus the amount of liquid substance can be distributed as desired over the cheeses lying in longitudinal direction of the reservoir and therefore in transverse direction relative to the conveyor, said amount depending on the amount of liquid substance required at any given location, this being determined by the size of the cheese surface at that location.

The adjustment of the required amounts of liquid substance at different locations in longitudinal direction of the reservoir is further facilitated by the measures of claim 6.

An especially efficient embodiment of the supply apparatus for the liquid substance of the installation according to the invention is described in claim 7.

The invention will be explained in more detail with a few exemplary embodiments by means of the accompanying drawing.
Figure 1 is a top view of the installation according to the invention in a first embodiment,
figure 2 is a partial cross section and a partial side view of the installation according to figure 1,
figure 3 is a top view of the installation according to the invention in a second embodiment,
figure 4 is a partial cross section and a partial side view of the installation according to figure 3, and
figure 5 is a top view of another embodiment of the installation according to the invention, which is preferably applied.

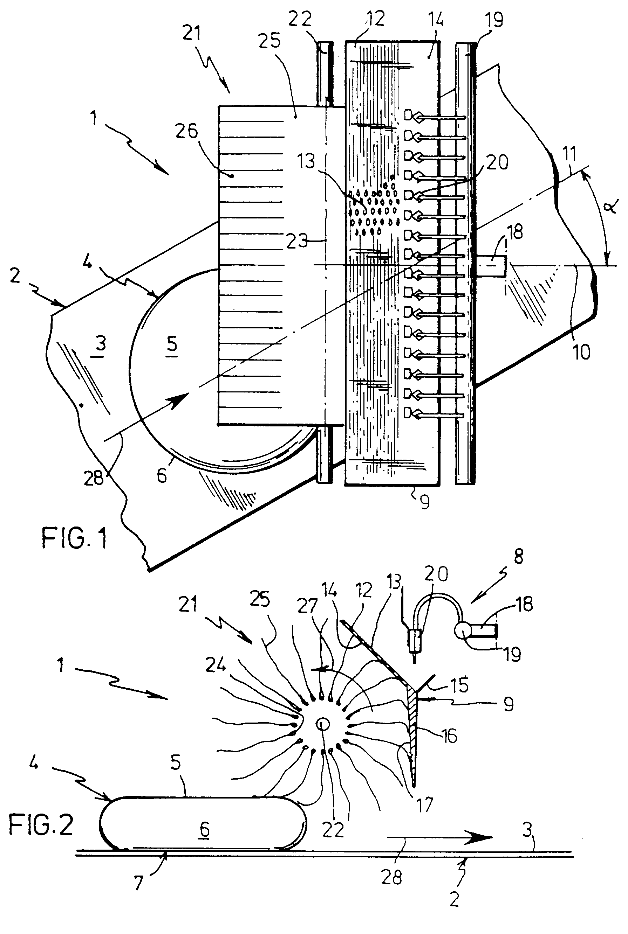

The installation according to figures 1 and 2 comprises a conveyor belt 2 with an upper surface 3, on which cheeses 4 are conveyed, which need to be treated with the liquid substance on their upper surface 5 and side surface 6. After all cheeses have been conveyed through the installation once, they are turned over and treated on their bottom surface 7 which then faces upwards. With every treatment of the cheeses 4, they are covered with liquid substance on their side surface 6 over more than half the area of that side surface, as is further explained below. The installation 1 according to figures 1 and 2 is particularly intended for coating the cheeses 4 with a layer of liquid plastic, which coagulates and hardens after some time, but it can of course also be used for treating cheeses 4 with a different liquid substance.

The installation 1 further comprises an apparatus 8 for supplying the liquid substance, which apparatus is provided with an elongated trough or V-shaped reservoir 9, of which the transverse centre plane 10, which is perpendicular to the upper surface 3 of the conveyor belt 2, intersects the longitudinal centre plane 11 of the conveyor belt 2, which is also perpendicular to the upper surface 3 of the conveyor belt 2, at an angle α of 15-60°, which angle is preferably ± 30°. The V-shaped reservoir 9 is provided with a perforated side wall 12, in which a large number of perforations 13 have been made evenly distributed over the surface. On the outer side, the side wall 12 has a wipe-off surface 14. The other side wall 15 of the reservoir 9 can have a smaller width than the side wall 12, said width depending, to some extent, on the amount of liquid substance to be applied.

A metering plate 16 is attached to the lowest part of the perforated side wall 12, the length of the metering plate in a plane parallel to the upper surface 3 of the conveyor belt 2 being equal to or larger than the length of the perforated portion of the side wall 12 and which metering plate is preferably perpendicular to the upper surface 3 of the conveyor belt 2, but can also enclose an acute angle therewith. On the side of the perforated side wall 12, the metering plate 16 has a metering surface 17.

The apparatus 8 is further provided with a supply line 18, a distribution line 19 which is connected to the supply line 18, and a plurality of metering devices 20, which are connected to the distribution line 19 and of which the flow rate of the liquid substance is adjustable between zero and the maximum flow rate. The flow rate of the metering devices 20 is moreover variable over the length of the reservoir 9.

The installation 1 further comprises an elongated cylindrical brush 21 with an shaft 22, which is mounted in bearings in the frame of the installation 1 (not shown) and which is parallel to the metering surface 17 of the metering plate 16 and to the wipe-off surface 14 of the perforated side wall 12 and of which the centre line 23 is equally spaced from said surfaces 14 and 17. Around the shaft 22, the brush 21 is provided with a cage of bars 24 parallel to the shaft 22, which are supported on the shaft 22 by means of end plates (not shown). An approximately rectangular piece 25 of slack cloth having a porous structure is attached onto each bar 24, of which piece of soft cloth one longitudinal edge is folded double around the bar 24 and the two layers are fastened together, for instance by being sown, parallel to the bar 24. The piece of cloth 25 is provided with closely spaced cuts over the greater part of the width of the piece of cloth in the direction perpendicular to the longitudinal centre line 23 of the brush 21, so that long, narrow, slack strips 26 are created, which form the "brush hairs" of the brush 1.

The distance from the centre line 23 of the brush shaft 23 to the surfaces 17 and 14 is such that the strips 26 sweep the surfaces 17 and 14 with at least a part of their length. The brush 21 is driven in the direction of the arrow 27 and the conveyor belt 2 conveys the cheeses 4 in the direction of the arrow 28.

The piece of cloth 25 made of a slack fabric preferably consists of textile, which may be woven, knitted, crocheted or manufactured in another manner and which may be produced from natural or synthetic yarns. The brush 21 may also be covered with long, slack, natural or synthetic hairs.

Finally, the brush 21 is arranged at such a distance above the conveying surface 3 of the conveyor belt 2, that in their rotating movement the strips 26 reach down to beyond half the height of the cheeses, causing the strips 26 to sweep the cheeses at each passage of the cheeses through the apparatus over more than half the area of the cheeses.

The functioning of the installation 1 is as follows. The liquid substance which is to be applied to the cheeses, for instance the plastic coating, is supplied to the distribution line 19 by the line 18, which distribution line distributes the liquid substance over the metering devices 20. The metering devices 20 allow the liquid substance to flow into the reservoir 9. The liquid substance subsequently flows out of the bottom row or rows of perforations 13, depending on the amounts supplied by the metering devices 20, down along the wipe-off surface 14 of the side wall 12 and along the metering surface 17 of the distribution plate 16. The strips 26 of the piece of cloth 25 wipe the liquid substance from the metering surface 17 and absorb it into the pores. Subsequently, the strips 26 wipe along the wipe-off surface 14 and give a portion of the absorbed liquid substance and the excess amount thereof, respectively, back to the row or rows of perforations situated above the bottom row or rows, so that a circulation of liquid substance takes place through the perforations 13 in the side wall 12 of the reservoir 9. Consequently, the loss of liquid substance in the installation 1 is restricted to an absolute minimum or completely reduced to zero. The strips 26 subsequently wipe or sweep the liquid substance, evenly distributed, over the upper surface 5 and the greater part of the side surface 6 of the cheeses 4 and subsequently once again pick up liquid substance from the metering surface 17, etc.

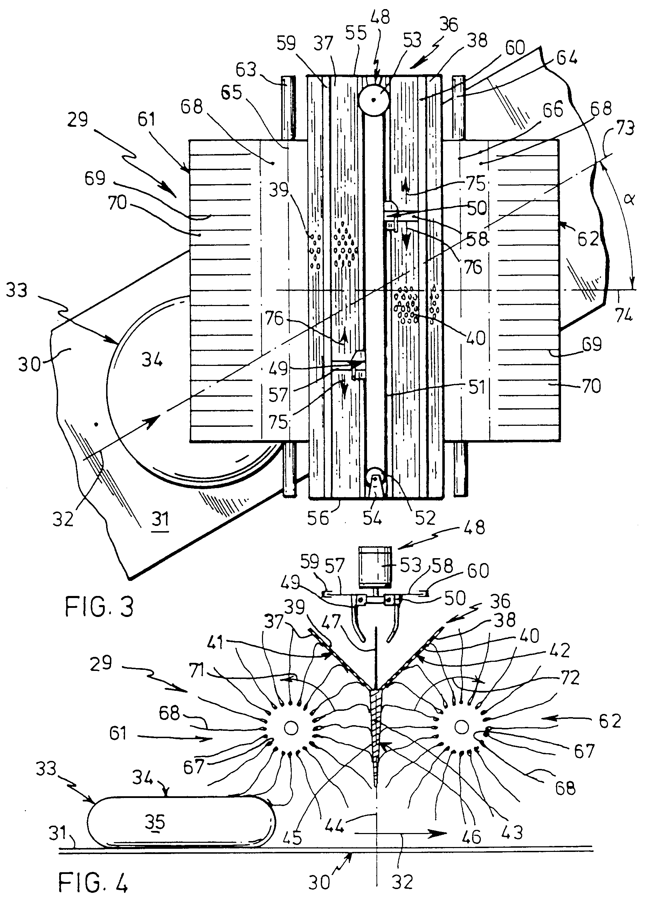

The installation 29 drawn in figures 3 and 4 is essentially a double embodiment of the installation 1 according to figures 1 and 2. The installation 29 has a conveyor belt 30 with upper surface 31, which is driven in the direction of the arrow 32. The cheeses 33 conveyed on the conveyor belt 30 have an upper surface 34 and a side surface 35.

The installation 29 is provided with a V-shaped reservoir 36 for the liquid substance, having two perforated side walls 37 and 38, in which a great number of perforations 39 and 40 have been provided, evenly distributed, and which are provided with wipe-off surfaces 41 and 42. The reservoir 36 further has a distribution plate 43, situated in the longitudinal centre plane 44 of the reservoir, which is essentially perpendicular to the conveyor belt 30. The distribution plate 43 is further provided with metering surfaces 45 and 46. Furthermore, a partition wall 47 is provided in the reservoir 36 itself, said partition wall dividing the reservoir space into two equal halves.

The installation 29 is provided with an apparatus 48 for the supply of the liquid substance, comprising two metering devices 49 and 50, which are attached to an endless belt 51. The belt 51 runs over two reversing pulleys 52, of which the pulley which has not been drawn is driven by a reversable electric motor 53. The reversing pulleys 52 are supported by mounting brackets 54 on end walls 55 and 56 of the reservoir 36. Furthermore, the metering devices 49 and 50 are guided with strips 57 and 58 in U-shaped guides 59 and 60, which area also supported on the end walls 55 and 56 of the reservoir 36.

Finally, the installation 29 is provided with brushes 61 and 62, having shafts 63 and 64 of which the centre lines 65 and 66 are parallel to the longitudinal centre plane 44 of the reservoir 36. The brushes 61 and 62 have a cage of bars 67 around the shafts 63 and 64, which are supported in a fashion similar to the bars 24 of the brushes 21 of the installation 1 according to figures 1 and 2, and in which on each bar 67 a rectangular piece 68 of slack cloth having a porous structure is attached in the manner as described with respect to figures 1 and 2. The pieces of cloth 68 are provided with closely spaced cuts 69 over a part of the width, creating long slack strips 70. The brushes 61 and 62 are drivable in opposite directions with an electric motor (not drawn) in the direction of the arrows 71 and 72 and their centre lines 65 and 66 lie at essentially the same distance from the metering surfaces 45 and 46, respectively, and from the wipe-off surfaces 41 and 42, respectively, such that the strips 70 sweep with at least a part of their length over the metering surfaces and wipe-off surfaces. The centre lines 65 and 66 of the brushes 61 and 62 are further parallel to the upper surface 31 of the conveyor belt 30 and at such a distance therefrom, that the strips 70 sweep the upper surface 34 and more than half the side surface 35 of the cheeses 33.

As in the embodiment of the installation 1 according to figures 1 and 2, the longidutinal centre plane 73 of the conveyor belt 30, which is perpendicular to the conveyor belt, intersects the transverse centre plane 74 of the reservoir 36 and the brushes 61 and 62, which is also perpendicular to the upper surface 31 of the conveyor belt 30, at an angle α of 15° to 60°, which angle α is preferably ± 30°.

The functioning of the installation 29 according to figures 3 and 4 is, as far as the cooperation between the brushes 61 and 62 and the metering surfaces 45 and 46, respectively and the wipe-off surfaces 41 and 42, respectively, of the reservoir are concerned and as far as the cooperation between the brushes 61 and 62 and the cheeses 33, as well as the achieved technical effect are concerned, essentially similar to that of the brush 21 with the reservoir 9 and with the cheeses 4 in the installation 1 according to figures 1 and 2. However, in the installation 29 according to figures 3 and 4, the cheeses 33 are swept by the brush 62 in opposite direction relative to that of the brush 61. Consequently, the surface of the cheeses 33 is provided with an even more evenly distributed liquid substance than is the case in the installation according to figures 1 and 2.

In the supply apparatus 48 according to figures 3 and 4 the endless belt 51 is driven by the reversible electric motor 53 in such a way, that the metering apparatuses 49 and 50 are reciprocated in the direction of the arrows 75 and 76 over a distance, which is preferably somewhat greater than the length of the brushes 61 and 62. Besides, both the velocity of movement of the metering devices 49 and 50 and the flow rate of the liquid substance through these metering devices over the length of the brushes 61 and 62 can be varied, depending on the size and shape of the cheeses 33.

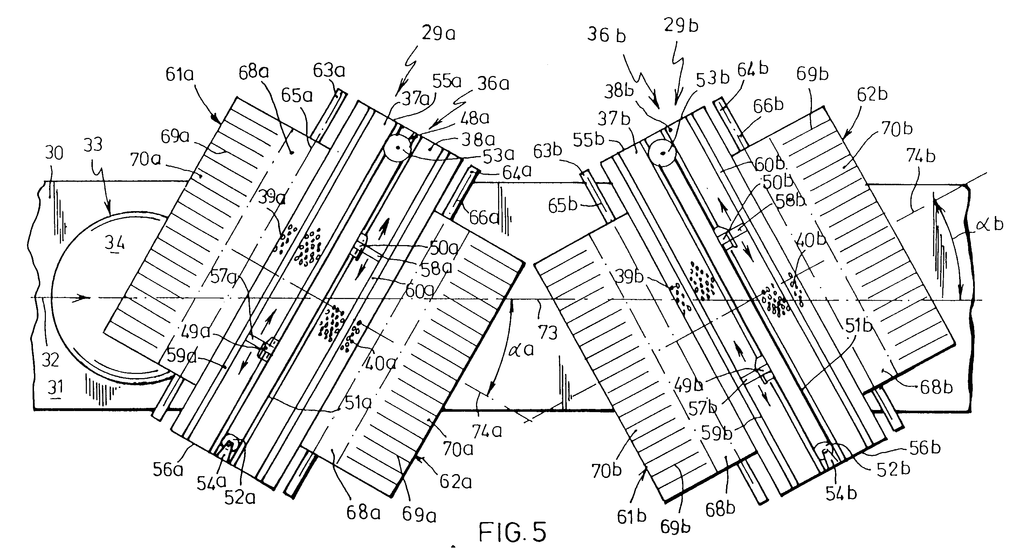

Figure 5 shows an embodiment of the installation according to the invention, which is in fact a redoubling of the one according to figures 3 and 4 and which is preferably applied in the so-called coating of the cheeses 22. The installation according to figure 5 comprises two installations 29a and 29b, similarly constructed, realized and arranged as the installation 29 according to figures 3 and 4, in which the parts of the installations 29a and 29b are indicated with the same reference numerals as the corresponding parts of the installation 29, supplemented with the letter a and b, respectively.

The installation according to figure 5 is provided with a conveyor belt 30 with an essentially horizontal upper surface 31, on which the cheeses 33 are conveyed in the direction of the arrow 32, which cheeses are in one passage coated on their upper surface 34 and over more than half their side surface with a liquid substance. During a next passage, the cheeses 33 are then coated with the liquid substance on their lower surface which is then facing upwards and at the same time once again over more than half their side surface.

The installation according to figure 5 comprises two V-shaped reservoirs 36a and 36b for the liquid substance, said reservoirs each being provided with two perforated side walls 37a, 38a and 37b, 38b, respectively, in which a large number of perforations 39a, 40a and 39b, 40b, respectively, are formed.

The installation according to figure 5 further comprises an apparatus 48a, 48b for the supply of the liquid substance, each comprising two metering devices 49a, 50a and 49b, 50b respectively, which are attached to an endless belt 51a and 51b, respectively. The belt runs over two reversing pulleys 52a and 52b, respectively, in which the pulley which has not been shown is driven by a reversible electric motor 53a and 53b, respectively. The reversing pulleys 52a and 52b are supported by mounting brackets 54a and 54b, respectively, on end walls 55a, 56a and 55b, 56b, respectively, of the reservoirs 36a and 36b, respectively. Furthermore, the metering devices 49a, 59a and 49b, 50b, respectively, are guided with strips 57a, 58a and 57b, 58b, respectively, in U-shaped guides 59a, 60a and 59b, 60b, respectively, which are also supported on the end walls 55a, 56a and 55b, 56b, respectively, of the reservoir 36a and 36b, respectively.

Finally, the installation according to figure 5 is provided with cylindrical brushes 61a, 62a and 61b, 62b, respectively, which are provided with shafts 63a, 64a and 63b, 64b, respectively, of which the centre lines 65a, 66a and 65b, 66b, respectively, are parallel to the longitudinal centre plane of the reservoir 36a and 36b, respectively. The brushes 61a, 62a and 61b, 62b have a cage of bars around the shafts 63a, 64a and 63b, 64b, respectively, which bars are supported in the same fashion as the bars 67 of the brushes 61 and 62 of the installation according to figure 3 and 4, in which on each bar a rectangular piece 68a or 68b, respectively, of slack cloth having a porous structure is attached in the manner as described by means of figures 3 and 4 or figures 1 and 2, respectively. The pieces of cloth 68 and 68b are provided with relatively closely spaced transverse cuts 69a and 69b, respectively, over a part of the width, creating long slack strips 70a and 70b, respectively. The brushes 61a, 62a and 61b, 62b, respectively, can be driven in pairs by an electric motor (not shown) in opposite directions and their centre lines 65a, 66a and 65b, 66b, respectively, lie at essentially the same distance from the metering surfaces and from the wipe-off surfaces of the reservoirs 36a and 36b, such, that the strips 70a and 70b, respectively, sweep with at least a part of their length over the metering surfaces and wipe-off surfaces. The centre lines 65a, 66a and 65b, 66b, respectively, of the brushes 61a, 62a and 61b, 62b, respectively, are further parallel to the upper surface 31 of the conveyor belt 30 and at such a distance therefrom, that the strips 70a and 70b, respectively, sweep the upper surface 34 and more than half the side surface of the cheeses 33.

The installations 29a and 29b are placed in such a way relative to the direction of conveyance 32 of the cheeses, that in the direction of conveyance the transverse centre plane 74a of the first installation 29a encloses an angle αa of 15° to 60°, preferably ± 30°, with the longitudinal centre plane 73 of the conveyor belt 30, the first installation 29a being rotated from a position transverse to the conveyor belt 30 as it were in clockwise direction around a line through the point A perpendicular to the upper surface 31 of the conveyor belt 30, while the transverse centre plane 74b of the second installation 29b encloses an angle αb of 15° to 6°, preferably ± 30°, with the longitudinal centre plane 73 of the conveyor belt 30, the second installation 29b being rotated from a position transverse to the conveyor belt as it were in anticlockwise direction around a line through the point B perpendicular to the upper surface 31 of the conveyor belt 30. The lines through the points A and B perpendicular to the plane of drawing or perpendicular to the upper surface 31 of the conveyor belt 30, respectively, form the intersecting lines between the transverse centre plane 74a of the first installation 29a and the longitudinal centre plane 73 of the conveyor belt 30 or between the transverse centre plane 74b of the second installation 29b and the longitudinal centre plane 73 of the conveyor belt 30, respectively.

The functioning of the installations 29a and 29b according to figure 5 is similar, as far as the functioning of the supply apparatuses for the liquid substance, the cooperation between the brushes and the metering surfaces and wipe-off surfaces, respectively, as well as the cooperation between the brushes and the cheeses and as far as the achieved technical effect are concerned, to that of the installation 29 according to figures 3 and 4, albeit that the homogeneity and the even distribution of the layer of liquid substance on the cheeses 33 is further improved by the two installations 29a and 29b, which coat the cheeses with the liquid substance, said two installations enclosing an acute angle with each other and with the direction of conveyance 32 of the cheeses 33.

## Claims

1. Installation for applying a liquid substance to cheeses (4), comprising a conveyor (2) for the cheeses, an apparatus (8) having one or more openings for the supply of the liquid substance to the cheeses, which supply apparatus (8) is provided with at least one wipe-off surface (14), and at least one cylindrical brush, arranged essentially horizontally, parallel to the wipe-off surface, having long brush hairs, which sweep along the wipe-off surface, **characterized in that** the supply apparatus is provided with at least one metering surface (17; 45, 46), provided with means (13; 39, 40; 39a, 40a; 39b, 40b) for supplying the liquid substance to the metering surface by means of gravitational force, said metering surface being essentially parallel to the centre line (23) of the cylindrical brush (21; 61, 62; 61a, 62a; 61b, 62b) and lying at least in part inside the outer diameter of the cylindrical brush on the side, where the brush hairs (25; 70; 70a; 70b) perform an essentially upward movement.

2. Installation according to claim 1, **characterized in that** the wipe-off surface (14; 41, 42) is arranged beyond the metering surface (17; 45, 46) in the direction of rotation of the cylindrical brush (21; 61, 62; 61a, 62a; 61b, 62b) and that the wipe-off surface is located on the side of the cylindrical brush, where the brush hairs (25; 70; 70a; 70b) perform an essentially upward movement.

3. Installation according to claim 1 or 2, in which the supply apparatus for the liquid substance to the cheeses is provided with a V-shaped reservoir having one or more discharge openings and a wipe-off plate, **characterized in that** a wipe-off plate is formed by at least one of the side walls (12; 37, 38; 37a, 38a; 37b, 38b) of the reservoir (9; 36; 36a; 36b) and is provided with a large number of perforations (14; 39, 40; 39a, 40a; 39b, 40b) distributed over the surface, that a metering plate (16; 43) is attached to the lowest part of the perforated side wall, such that the brush hairs (26; 70; 70a; 70b) first wipe along the metering plate and subsequently along the perforated side walls and that the brush hairs consist of long narrow strips (26; 70; 70a; 70b) of a soft fabric having a porous structure.

4. Installation according to claim 3, **characterized in that** the supply apparatus (8) for the liquid substance comprises a multitude of metering devices (20) spaced over the length of the reservoir, the flow rate of each separate device being continuously adjustable between zero and the maximum flow rate.

5. Installation according to claim 3, **characterized in that** the supply apparatus for the liquid substance comprises one metering device (49, 50; 49a, 50a; 49b; 50b) for each perforated side wall (37, 38; 37a, 38a; 37b, 38b) of the reservoir (36; 36a; 36b), which metering device is movable parallel to the centre line of each cylindrical brush (61, 62; 61a, 62a; 61b, 62b) and that the velocity of movement of each metering device is variable.

6. Installation according to claim 5, **characterized in that** the flow rate of each metering device (49, 50, 49a, 50a; 49b, 50b) is continuously adjustable between zero and the maximum flow rate.

7. Installation according to claim 5 or 6, **characterized in that** the two metering devices (49, 50; 49a, 50a; 49b, 50b) belonging to each reservoir (36; 36a; 36b) are each mounted on a guiding means (59, 60; 59a, 60a; 59b, 60b) and are connected to each other by an endless belt (51, 51a; 51b), which can be driven by an electric motor (53; 53a; 53b) having an adjustable rotational speed.

## Patentansprüche

1. Anlage zum Anbringen einer Flüssigkeitssubstanz (4) auf Käse, mit einem Förderer (2) für den Käse, eine Vorrichtung (8) mit einer oder mehreren Öffnungen für die Zufuhr der Flüssigkeitssubstanz zum Käse, welche Zufuhrvorrichtung (8) mit mindestens einer Abstreichfläche (14) und mindestens einer zylindrischen Bürste, im wesentlichen horizontal aufgestellt, parallel zur Abstreichfläche, mit langen die Abstreichfläche entlang kehrenden Borsten versehen sind, **dadurch gekennzeichnet,** dass die Zufuhrvorrichtung mit mindestens einer Dosierfläche (17; 45, 46) mit Mitteln (13; 39, 40; 39a, 40a; 39b, 40b) für die Zufuhr der Flüssigkeitssubstanz zur Dosierfläche mittels Schwerkraft versehen ist, wobei die Dosierfläche im wesentlichen parallel zur Mittellinie (23) der zylindrischen Bürste (21; 61, 62; 61a, 62a; 61b, 62b) und mindestens zum Teil innerhalb des Aussendurchmessers der zylindrischen Bürste an der Seite an der die Borsten (25; 70; 70a; 70b) eine wesentlich aufwärtige Bewegung ausführen, gelegen ist.

2. Anlage nach Anspruch 1, **dadurch gekennzeichnet,** dass die Abstreichfläche (14; 41, 42) jenseits der Dosierfläche (17; 45, 46) in der Richtung der Umdrehung der zylindrischen Bürste (21; 61, 62; 61a, 62a; 61b, 62b) angeordnet ist und dass die Abstreichfläche sich an der Seite der zylindrischen Bürste befindet, wo die Borsten (25; 70; 70a; 70b) eine wesentlich aufwärtige Bewegung ausführen.

3. Anlage nach Anspruch 1 oder 2, wobei die Zufuhrvorrichtung für die Flüssigkeitssubstanz zum Käse mit einem V-förmigen Behälter mit einer oder mehreren Abfuhröffnungen und einer Abstreichplatte versehen ist, **dadurch gekennzeichnet,** dass eine Abstreichplatte durch mindestens einer der Seitenwände (12; 37, 38; 37a, 38a; 37b, 38b) des Behälters (9; 36; 36a; 36b) gebildet ist und mit einer grossen Anzahl über die Fläche verteilte Perforationen (14; 39, 40; 39a, 40a; 39b, 40b) versehen ist, dass eine Dosierplatte (16; 43) am untersten Teil der perforierten Seitenwand befestigt ist, solcherart dass die Borsten (26; 70; 70a; 70b) zuerst entlang der Dosierplatte abstreichen und danach entlang den perforierten Seitenwänden und dass die Borsten aus langen, schmalen Streifen (26; 70; 70a; 70b) eines weichen Stoffes mit einer porösen Struktur bestehen.

4. Anlage nach Anspruch 3, **dadurch gekennzeichnet,** dass die Zufuhrvorrichtung (8) für die Flüssigkeitssubstanz eine Vielzahl über die Behälterlänge verteilt aufgestellte Dosiereinrichtungen (20) enthält, wobei die Abflussmenge jeder einzelnen Einrichtung durchgehend zwischen Null und der Maximumabflussmenge einstellbar ist.

5. Anlage nach Anspruch 3, **dadurch gekennzeichnet,** dass die Zufuhrvorrichtung (8) für die Flüssigkeitssubstanz eine Dosiervorrichtung (49, 50; 49a, 50a; 49b; 50b) für jede perforierte Seitenwand (37, 38; 37a, 38a; 37b, 38b) des Behälters (36; 36a; 36b) enthält, welche Dosiervorrichtung parallel zur Mittellinie jeder zylindrischen Bürste (61, 62; 61a, 62a; 61b, 62b) bewegbar ist, und dass die Bewegungsgeschwindigkeit jeder Dosiervorrichtung regelbar ist.

6. Anlage nach Anspruch 5, **dadurch gekennzeichnet,** dass die Abflussmenge jeder Dosiervorrichtung (49, 50, 49a, 50a; 49b, 50b) durchgehend zwischen Null und der Maximumabflussmenge einstellbar ist.

7. Anlage nach Anspruch 5 oder 6, **dadurch gekennzeichnet,** dass die zwei zu jedem Behälter (36; 36a; 36b) gehörenden Dosiervorrichtungen (49, 50; 49a, 50a; 49b, 50b) auf einem Führungsmittel (59, 60; 59a, 60a; 59b, 60b) aufgestellt und durch einen Endlosriemen (51, 51a; 51b), der durch einen mit einer einstellbaren Umdrehungsgeschwindigkeit versehenen Elektromotor angetrieben (53; 53a; 53b) werden kann, miteinander verbunden sind.

## Revendications

1. Installation pour l'application d'une substance liquide à des fromages (4) comprenant un convoyeur (2) pour les fromages, un appareil (8) ayant une ou plusieurs ouvertures pour l'amenée de la substance liquide sur le fromage, lequel appareil d'alimentation (8) est muni d'au moins une surface d'essuyage (14) et d'au moins une brosse cylindrique disposée sensiblement horizontalement, parallèle à la surface d'essuyage, avec de longs poils de brosse, qui balaie le long de la surface d'essuyage, caractérisée en ce que l'appareil d'alimentation est muni d'au moins une surface de dosage (17; 45, 46) munie de moyens (13; 39, 40; 39a, 40a; 39b, 40b) pour l'alimentation de la substance liquide sur la surface de dosage au moyen de la force gravitationnelle, cette surface de dosage étant sensiblement parallèle à l'axe géométrique (23) de la brosse cylindrique (21; 61, 62; 61a, 62a; 61b, 62b) et se situant au moins en partie à l'intérieur du diamètre extérieur de la brosse cylindrique sur le côté où les poils de brosse (25; 70; 70a; 70b) effectuent un mouvement sensiblement vers le haut.

2. Installation selon la revendication 1, caractérisée en ce que la surface d'essuyage (14; 41, 42) est disposée au-delà de la surface de dosage (17; 45, 46) dans la direction de rotation de la brosse cylindrique (21; 61, 62; 61a, 62a; 61b, 62b) et en ce que la surface d'essuyage est située sur le côté de la brosse cylindrique ou les poils de brosse (25; 70; 70a; 70b) effectuent un mouvement sensiblement vers le haut.

3. Installation selon la revendication 1 ou 2, dans laquelle l'appareil d'alimentation de la substance liquide aux fromages est muni d'un réservoir en forme de V avec une ou plusieurs ouvertures de décharge et une plaque d'essuyage, caractérisée en ce que la plaque d'essuyage est constituée d'au moins l'une des parois latérales (12; 37, 38; 37a, 38a; 37b, 38b) du réservoir (9; 36; 36a; 36b) et est dotée d'un grand nombre de perforations (14; 39, 40; 39a, 40a; 39b, 40b) réparties sur la surface, en ce qu'une plaque de dosage (16; 43) est fixée sur la partie inférieure extrême de la paroi latérale perforée, de telle sorte que les poils de brosse (26; 70; 70a; 70b) balaient d'abord le long de la plaque de dosage et ensuite le long des parois latérales perforées et en ce que les poils de brosse consistent en de longues bandes étroites (26; 70; 70a; 70b) d'un tissu mou ayant une structure poreuse.

4. Installation selon la revendication 3, caractérisée en ce que l'appareil d'alimentation 8 pour la substance liquide comprend une multitude de dispositifs de dosage (20) espacés sur la longueur du réservoir, le débit de chaque dispositif séparé étant ajustable en continu entre le débit zéro et le débit maximum.

5. Installation selon la revendication 3, caractérisée en ce que l'appareil d'alimentation pour la substance liquide comprend un dispositif de dosage (49, 50; 49a, 50a; 49b, 50b) pour chaque paroi latérale perforée (37, 38; 37a, 38a; 37b, 38b) du réservoir (36; 36a; 36b), lequel dispositif de dosage est mobile parallèlement à l'axe géométrique de chaque brosse cylindrique (61, 62; 61a, 62a; 61b, 62b) et en ce que la vitesse de mouvement de chaque dispositif de dosage est variable.

6. Installation selon la revendication 5, caractérisée en ce que le débit de chaque dispositif de dosage (49, 50; 49a, 50a; 49b, 50b) est ajustable de façon continue entre le débit zéro et le débit maximum.

7. Installation selon la revendication 5 ou 6, caractérisée en ce que les deux dispositifs de dosage (49, 50; 49a, 50a; 49b, 50b) faisant partie de chaque réservoir (36; 36a; 36b) sont montés chacun sur un moyen de guidage (59, 60; 59a, 60a; 59b, 60b) et sont raccordés entre eux par une courroie sans fin (51, 51a; 51b) qui peut être entraînée par un moteur électrique (53; 53a; 53b) ayant une vitesse de rotation ajustable.
